# EUROPÄISCHE PATENTSCHRIFT

(11) **EP 3 491 261 B1**
(45) Veröffentlichungstag und Bekanntmachung des Hinweises auf die Patenterteilung: **29.09.2021**
(21) Anmeldenummer: 17751061.7
(22) Anmeldetag: 01.08.2017
(51) Int. Cl.: F16D 1/072, B21D 39/04, B21D 53/88, B62D 1/16

(54) **VERFAHREN ZUR HERSTELLUNG EINES LENKSPINDELTEILS FÜR EIN KRAFTFAHRZEUG**
METHOD FOR PRODUCING A STEERING SHAFT PART FOR A MOTOR VEHICLE
PROCÉDÉ DE FABRICATION D'UN ÉLÉMENT D'UNE COLONNE DE DIRECTION DE VÉHICULE AUTOMOBILE

(30) Priorität: 01.08.2016 DE 102016214163
(43) Veröffentlichungstag der Anmeldung: 05.06.2019
(73) Patentinhaber: thyssenkrupp Presta AG, 9492 Eschen (LI); thyssenkrupp AG, 45143 Essen (DE)
(72) Erfinder: KRIMMEL, Achim, 9466 Sennwald (CH); MÜNTENER, Herbert, 9491 Ruggell (LI); GSTACH, Werner, 6820 Frastanz (AT); AMBAGTSHEER, Willem, 9104 Waldstatt (CH)
(74) Vertreter: thyssenkrupp Intellectual Property GmbH
(86) Internationale Anmeldenummer: PCT/EP2017/069377
(87) Internationale Veröffentlichungsnummer: WO 2018/024701

(56) Entgegenhaltungen:
- WO-A1-2007/098513
- DE-A1-102009 038 316
- US-A- 4 561 799

## Beschreibung

### Stand der Technik

Die Erfindung betrifft ein Verfahren zur Herstellung eines Lenkspindelteils, welches einen Abschnitt einer Lenkspindel für ein Kraftfahrzeug bildet und in Form einer Hohlwelle ausgebildet ist und zumindest an einem seiner Enden einen Verbindungsabschnitt aufweist, der zumindest über einen Teil seiner Länge eine gegenüber einem sich an den Verbindungsabschnitt anschließenden Abschnitt des Lenkspindelteils vergrößerte Wandstärke aufweist, umfassend die Schritte:
- Bereitstellen eines hohlzylinderförmigen Rohrs mit einer in Umfangsrichtung glatten Innenfläche mit kreisrundem Querschnitt,
- Bereitstellen einer hohlzylinderförmigen Hülse,
- Einsetzen der Hülse in einen Endabschnitt des Rohrs,
- Gemeinsames Umformen des Endabschnitts des Rohrs und der Hülse, wobei ein Fließen des Materials des Rohrs und der Hülse erfolgt,
wobei die hohlzylinderförmige Hülse eine in Umfangsrichtung glatte Außenfläche mit kreisrundem Querschnitt aufweist und durch das Fließen des Materials an dem Rohr und an der Hülse in Umfangsrichtung ineinander eingreifende Formschlusselemente ausgebildet werden zur Erzeugung eines in Umfangsrichtung wirkenden Formschlusses.

Eine Lenkspindel für ein Kraftfahrzeug mit mindestens einem Lenkspindelteil, welches in Form einer Hohlwelle ausgebildet ist und zumindest an einem seiner Enden einen Verbindungsabschnitt aufweist, der zumindest über einen Teil seiner Länge eine gegenüber einem sich an den Verbindungsabschnitt anschließenden Abschnitt des Lenkspindelteils vergrößerte Wandstärke aufweist, ist ebenfalls Gegenstand der Erfindung.

Üblicherweise weist eine Lenkspindel für ein Kraftfahrzeug mehrere Lenkspindelteile auf, die jeweils einen Abschnitt der Lenkspindel bilden. Am bezogen auf die Fahrtrichtung hintersten Lenkspindelabschnitt ist an dessen hinterem Ende das Lenkrad festgelegt. Am bezogen auf die Fahrtrichtung vordersten Lenkspindelabschnitt ist an dessen vorderem Ende häufig ein Ritzel eines Lenkgetriebes festgelegt. Neben solchen Lenkspindelteilen, die über Kreuzgelenke miteinander verbunden sein können, sind gegeneinander verschiebbare, in axialer Richtung gegeneinander teleskopierbare Lenkspindelteile vorhanden, welche zur Einstellung der Länge der Lenksäule und/oder zur Aufnahme von Längsverschiebungen im Crashfall dienen.

Die Anbringung des Lenkrades an dem hintersten Lenkspindelteil erfolgt bei einer bekannten Ausführungsform mittels einer Verschraubung. Hierzu weist das in Form einer Hohlwelle ausgebildete Lenkspindelteil endseitig einen Verbindungsabschnitt auf, welcher ausgehend vom Ende des Lenkspindelteils einen im Wesentlichen hohlzylindrischen Abschnitt und anschließend an diesen einen konischen Abschnitt hat, der sich zur Mitte des Lenkspindelteils hin erweitert. Der hohlzylindrische Abschnitt ist mit einem Innengewinde und einer Außenverzahnung versehen. Die Außenverzahnung greift in eine Innenverzahnung der Nabe des Lenkrads ein und mittels des Innengewindes erfolgt die Verschraubung des Lenkrads am Lenkspindelteil. Das Lenkspindelteil muss hierbei im Verbindungsabschnitt, insbesondere im hohlzylindrischen Endabschnitt eine ausreichend große Wandstärke aufweisen. Diese ist größer als die zur Übertragung des Drehmoments erforderliche Wandstärke über die restliche Länge des rohrförmigen Lenkspindelteils. Herkömmlicherweise werden daher zur Ausbildung des Lenkspindelteils Rohre verwendet, die zunächst eine größere Wandstärke aufweisen, als sie - abgesehen vom Verbindungsabschnitt - erforderlich ist. Es erfolgt dann eine Bearbeitung des Rohrs über seine gesamte Längsausdehnung, insbesondere durch Hämmern oder ähnliche Umformverfahren, beispielsweise Kneten bzw. Rundkneten. Im Verbindungsabschnitt wird hierbei der Durchmesser des Rohrs verringert. Über die restliche Länge des Rohrs wird die Wandstärke des Rohrs verringert. Dabei können auch über Abschnitte des Rohrs Strukturen eingebracht werden, die beispielsweise zur teleskopierbaren, aber unverdrehbaren, drehmomentschlüssigen Verbindung mit einem weiteren Lenkspindelteil dienen. Die Ausbildung von solchen Konturen, insbesondere in Form von Bogenverzahnungen oder Kleeblattprofilen ist bekannt. Beispielsweise zeigt die DE 197 50 005 C1 Lenkspindelteile mit derartigen Konturen.

Zur Erzeugung der größeren Wandstärke im Bereich des Verbindungsabschnitts ist es bekannt, eine rohrabschnittförmige Hülse in das Ende des Rohrs einzusetzen und die Hülse unlösbar mit dem Rohr zu verbinden. In der EP 1 989 011 B1 und der WO 2007/098513 A1 wird zur Erzeugung der Verbindung der Hülse mit dem Rohr beschrieben, zunächst die Hülse in das Rohr einzupressen und anschließend das Rohr und die Hülse gemeinsam umzuformen. Die Umformung sieht vor, dass das Rohr mittels eines kalt durchgeführten Druckumformverfahrens wie Hämmern oder Kneten plastisch verformt wird, wobei es mit seiner Innenfläche von außen, d.h. bezüglich der Längsachse radial gegen die Außenfläche der Hülse angepresst wird, so dass es plastisch angeformt wird und zwischen den gegeneinander verpressten Flächen eine kraftschlüssige Verbindung erzeugt wird.

In dem bekannten Stand der Technik wird als Ausgangsmaterial ein hohlzylinderförmiges Rohr verwendet, mit einer in Umfangsrichtung glatten Innenfläche mit kreisrundem Querschnitt, die anders ausgedrückt eine zylindrische innere Mantelfläche mit kreislinienförmigem Querschnitt bildet. Dieses glatte Rohr wird mit seiner Innenfläche durch Druckumformung mit der Außenfläche der Hülse verbunden, die in einer bekannten Ausführung eine zylindrische äußere Mantelfläche mit ebenfalls kreislinienförmigem Querschnitt hat. Beim Druckumformen werden die beiden Mantelflächen in dauerhaften Kontakt gebracht, wodurch eine kraftschlüssige Verbindung zur Übertragung des Lenkmoments vom Lenkrad in die Lenkspindel gebildet wird.

Um diese drehmomentschlüssige Verbindung belastbarer auszugestalten, wird in der EP 1 989 011 B1 vorgeschlagen, die Hülse vor dem Einsetzen in das Rohr auf ihrer Außenfläche mit einer Rändelung oder Umfangsverzahnung zu versehen. Die dabei von dem kreisrunden Querschnitt der Hülse radial vorstehenden Strukturen wie Rändelzacken oder Zähne graben sich beim Umformen in die Innenfläche des Rohrs ein und bilden damit Formschlusselemente, durch die eine in Umfangsrichtung wirkende Formschlussverbindung realisiert wird.

Eine in Umfangsrichtung wirkende formschlüssige Verbindung wirkt einer Verdrehung des Rohrs in der Hülse entgegen und ermöglicht dadurch die sichere Übertragung höherer Drehmomente, wie dies beim Vorspannen (Festziehen) der Schraubenverbindung zur Fixierung des Lenkrades auf der Lenkspindel vorkommen kann. Die bekannte Herstellung setzt jedoch voraus, dass die Formschlusselemente vor dem Einsetzen an der Hülse ausgebildet werden müssen. Dazu ist ein separater Bearbeitungsschritt erforderlich, wodurch der Fertigungsaufwand erhöht wird.

Als nächstliegender Stand der Technik wird die WO 2007/098513 A1 zugrunde gelegt.

Angesichts der vorangehend erläuterten Problematik ist es eine Aufgabe der vorliegenden Erfindung, ein Verfahren zur Verfügung zu stellen, welches die Herstellung eines belastbaren Verbindungsabschnitts mit geringerem Fertigungsaufwand ermöglicht.

### Darstellung der Erfindung

Zur Lösung der vorgenannten Problematik wird erfindungsgemäß vorgeschlagen, dass zum Umformen ein Dorn mit unrundem Querschnitt in die Hülse eingebracht wird, und von außen Umformdruck auf das Rohr aufgebracht wird, um das Rohr und die Hülse gemeinsam auf dem Dorn abzuformen, wobei der Umformdruck über mindestens ein Umformwerkzeug auf das Rohr aufgebracht wird.

Zur Durchführung des Verfahrens kann vorgesehen sein, dass zum Umformen ein Dorn mit unrundem Querschnitt in die Hülse eingebracht wird, und von außen Umformdruck auf das Rohr aufgebracht wird, um das Rohr und die Hülse gemeinsam auf dem Dorn abzuformen. Beim Umformen wird der von außen ausgeübte Umformdruck über das Rohr auf die Hülse übertragen, wodurch diese gegen den im Wesentlichen unnachgiebigen Dorn angepresst und plastisch verformt wird. Dadurch wird die unrunde Querschnittsform als Abdruck von innen in der Hülse abgeformt. Die Verformung der Hülse korrespondiert mit einem formschlüssigen Eingriff der Innenfläche des radial von außen angepressten Rohrs.

Der Dorn kann beispielsweise mindestens einen auf seiner Außenfläche vorstehenden Formvorsprung aufweisen, oder mehrere über den Umfang verteilte Formvorsprünge aufweisen. Beim Umformen wird das die Wandung der Hülse von außen gegen die Formvorsprünge angepresst, so dass diese sich in die Innenseite der Hülse einpressen. An denselben Stellen wird die Hülse derart plastisch verformt, dass sich auf ihrer Außenfläche nach außen vorstehende Vorsprünge bilden, welche in Umfangsrichtung wirkende Formschlusselemente bilden. Beim gemeinsamen Umformen werden diese Vorsprünge dann ihrerseits von innen in das Material der Innenfläche des Rohrs plastisch eingepresst, wobei in der Innenfläche des Rohrs Formschlusselemente in Form von Vertiefungen gebildet werden. Mit anderen Worten fließt das Material der Hülse beim Umformen, wobei nach außen vorstehende Formschlusselemente der Hülse gebildet werden, die sich in dabei gleichzeitig gebildete Formschlusselemente in Form von Vertiefungen in der Innenfläche des Rohrs plastisch einformen. Bevorzugt kann die Außenfläche des Dorns in axialer Richtung konisch ausgebildet sein, so dass sich der Dorn nach der Umformung in einfacher und leichtgängiger Weise aus der umgeformten Hülse herausziehen lässt.

Der Dorn kann einen Umformdorn und einen ersten Stützdorn aufweisen, wobei der Umformdorn einen Umformabschnitt aufweist, der beim Umformen in den dabei umgeformten Verbindungsabschnitt in die Hülse eingebracht wird, und der erste Stützdorn einen Stützabschnitt aufweist, der in einen sich an den Verbindungsabschnitt anschließenden Abschnitt des Rohrs eingesetzt wird, der beim Umformvorgang nicht umgeformt wird. Der Umformdorn und der erste Stützdorn können gegeneinander beweglich sein. Die vorangehend beschriebenen Vertiefungen oder Abflachungen des Dorns befinden sich im Umformdorn. Dadurch ist eine sichere Aufnahme der beim Umformen auftretenden Kräfte gewährleistet, so dass im Verbindungsabschnitt der angestrebte Materialfluss erfolgt und außerhalb des Verbindungsabschnitts das Rohr seine Form behält.

Bevorzugt kann der Dorn zusätzlich oder anstelle des ersten Stützdorn einen zweiten Stützdorn aufweisen. Der zweite Stützdorn wirkt mit dem Umformdorn zusammen, wobei der zweite Stützdorn den Umformdorn im Bereich des offenen Endes des Verbindungsabschnittes in radialer Richtung abstützt. Der zweite Stützdorn ragt bevorzugt zumindest teilweise in den offenen Innenquerschnitt der Hülse hinein, wobei der zweite Stützdorn und der Umformdorn in axialer Richtung nicht aneinander anliegen, also nicht auf Block gefahren sind, so dass der Materialfluss bei der Umformung begünstigt ist. Der zweite Stützdorn weist bevorzugt einen konischen Außenflächenabschnitt auf, der in das offene Ende des Verbindungsabschnitts zumindest teilweise hineinragt. Dieser konische Außenflächenabschnitt begünstigt ein kraftarmes Herausziehen aus der umgeformten Hülse nach der Umformoperation.

Bevorzugt bewegen sich der zweite Stützdorn und der Umformdorn gegensinnig in Längsrichtung vor und nach der Umformoperation, mit anderen Worten bewegen sich der Umformdorn und der zweite Stützdorn zur Aufnahme des umzuformenden Rohrs und der Hülse vor der Umformoperation in Längsrichtung aufeinander zu und nach der Umformoperation bewegen sich der Umformdorn und der zweite Stützdorn in Längsrichtung voneinander weg.

Der Umformdruck kann von außen über mindestens ein Umformwerkzeug auf das Rohr aufgebracht wird. Das Umformwerkzeug kann beispielsweise einen Hammerkopf aufweisen, mit dem Schläge lokal auf den Außenumfang des Rohrs ausgeübt werden, um lokale radial nach innen gerichtete Deformationen zu erzeugen. Beim sogenannten Rundhämmern werden ein oder mehrere solcher Hammerköpfe um den Umfang verteilt angeordnet, und zwischen aufeinander folgenden Hammerschlägen wird das Rohr relativ zu den Hammerköpfen um seine Längsachse gedreht. Dadurch kann das Rohr zusammen mit der Hülse über den gesamten Umfang bearbeitet werden, um beispielsweise einen eingesetzten unrunden Dorn abzuformen. Alternativ kann zum Umformen Kneten bzw. Rundkneten eingesetzt werde, bei dem durch einen oder mehrere Druckstempel oder Druckwalzen die zur Verformung erforderliche Umformkraft in kontinuierlichen Umformhüben Bereich des Verbindungsabschnitts radial von außen im auf das Rohr ausgeübt wird.

Erfindungsgemäß wird eine glatte Hülse verwendet, die eine Außenfläche mit einem im Querschnitt kreislinienförmigen Umfang hat. Damit ist eine äußere Umfangsfläche mit einer zylindrischen Form bezeichnet, von der keine Strukturen wie Zähne, Zacken oder andere Vorsprünge nach außen vorstehen, und in die keine Strukturen wie Nuten, Rillen oder anders geformte Vertiefungen eingeformt sind. Der Umfang ist durchgehend kreisförmig.

Beim erfindungsgemäßen Verfahren werden während der Verbindung durch die dabei stattfindende Umformung formschlüssig ineinander greifende Strukturen erzeugt, und zwar an dem Rohr und dazu korrespondierend an der Hülse. Beim Umformen wird das Material - wie an sich bekannt - plastisch verformt. Während jedoch im Stand der Technik das damit einhergehende Fließen des Materials lediglich zu einer Verbindung von Flächen unter Ausnutzung von bereits vor dem Umformen vorhandenen Formen bzw. Oberflächenstrukturen dient, nutzt die Erfindung den beim Umformen auftretenden Materialfluss gezielt zur Bildung von vorher nicht vorhandenen Formschlusselementen aus. Daraus resultiert der Vorteil, dass zur Erzeugung einer besonders belastbaren Verbindung vor dem Zusammenfügen durch Umformen keine Bearbeitung der Hülse oder des Rohrs zur Bereitstellung von Formschluss-elementen erfolgen muss. Der in der EP 1 989 011 B1 erforderliche Bearbeitungsschritt zur Einbringung einer Außenverzahnung oder Rändelung in die Außenfläche der Hülse kann entfallen. Entsprechend wird der Fertigungsaufwand reduziert.

Das erfindungsgemäße Verfahren kann realisiert werden, indem der Querschnitt des Rohrs beim Umformen nicht wie im Stand der Technik gleichmäßig über den gesamten Umfang unter Beibehaltung der kreisrunden, zylindrischen Grundform in radialer Richtung verkleinert wird, wobei im Prinzip lediglich eine Durchmesserverengung des Rohrs bewirkt wird ähnlich wie beim Aufschrumpfen, sondern eine gemeinsame Strukturierung von Rohr und Hülse über den Umfang vorgenommen wird. Bei der Strukturierung erfolgt eine kontrollierte Deformierung des ursprünglich kreisrunden, kreislinienförmigen Querschnitts der bei der Verbindung gegeneinander anliegenden Umfangsflächen in eine unrunde Querschnittsform. Durch die beim Umformen kraftschlüssig gegeneinander verpressten unrunden Umfangsflächen von Rohr und Hülse wird ein in Umfangsrichtung wirkender Formschluss zwischen Rohr und Hülse erzeugt, bei dem die in Umfangsrichtung gegeneinander anliegenden Formflächen der von der kreisrunden Zylinderform abweichenden, radial vorstehenden und/oder vertieften Formschlusselemente für einen drehmomentschlüssigen Formschlusseingriff sorgen.

Abweichend vom genannten Stand der Technik, bei dem lediglich eines der zusammenzufügenden Elemente, nämlich die Hülse, mit einer Verzahnung oder Rändelung versehen wird, an die das andere Element, nämlich das Rohr, angeformt wird, werden beim erfindungsgemäßen Verfahren beide Elemente, nämlich das Rohr und die Hülse, gleichzeitig umgeformt und die Formschlusselemente gleichzeitig ausgebildet. Das Fließen des Materials erfolgt auf beiden Seiten der gegeneinander anliegenden Fügeflächen, nämlich der Umfangsflächen von Rohr und Hülse, so dass ein besonders gleichmäßiger Fügekontakt zustande kommt. Die Ausformung von Vorsprüngen auf der Innenfläche bewirkt erfindungsgemäß die Bildung von damit exakt formschlüssig korrespondierenden Einformungen in der dagegen angepressten Außenfläche, und umgekehrt.

Gemäß dem erfindungsgemäßen Verfahren kann die Bildung der Formschlusselemente dadurch erfolgen, dass die Querschnitte des Rohrs und der Hülse gemeinsam unrund deformiert werden. Eine unrunde Deformierung kann bereits dadurch erfolgen, dass eine einseitige Abflachung erfolgt, wie sie von einfachen Welle-Nabe-Verbindungen bekannt ist. Eine vorteilhafte Ausbildung sieht eine symmetrisch über den Umfang verteilte Anordnung von Abflachungen vor, beispielsweise auf einander gegenüberliegenden Seiten, oder polygonal-prismenförmig als regelmäßiger Drei-, Vier-, Fünf- oder Sechskant oder auch allgemein als regelmäßiger oder unregelmäßiger Mehrkant.

Als unrunde Deformierung wird verstanden, dass eine kreiszylindrische Querschnittsform zu einer von der kreiszylindrischen abweichenden Querschnittskontur deformiert wird.

Die Gestaltung von gerundeten Querschnittsformen, die beispielsweise oval oder elliptisch oder durch Kombination von geraden und gerundeten Abschnitten ausgebildet sein können, ist ebenfalls denkbar. Vorteilhaft an gerundeten Formen ist die Vermeidung von lokalen Kraftspitzen innerhalb der Fügeflächen. Außerdem können gerundete Querschnitte besonders gut von dem beim Umformen fließenden Material ausgefüllt werden.

Bei der Erfindung kann vorgesehen sein, dass bei dem gemeinsamen Umformen des Rohrs und der Hülse ihre Außen- und Innendurchmesser zumindest über einen Abschnitt ihrer gemeinsamen Längserstreckung verringert werden. Auf diese Weise kann ausgehend vom Ende des Rohrs als Verbindungsabschnitt zunächst ein hohlzylinderförmiger Abschnitt und an diesen zur Rohrmitte hin anschließend ein konischer Abschnitt ausgebildet werden, der sich zum benachbarten Ende des Rohrs hin verjüngt. An den konischen Abschnitt kann sich nochmals ein hohlzylinderförmiger Abschnitt anschließen, in welchem der Außen- und Innendurchmesser des Rohrs und der Hülse ihren ursprünglichen Wert aufweisen. In dem konischen Abschnitt und dem endseitigen hohlzylinderförmigen Abschnitt sind der Innen- und Außendurchmesser des Rohrs und der Hülse gegenüber ihrem ursprünglichen Wert verringert.
Bevorzugt erfolgt das Umformen durch Kaltumformen. Dabei erfolgt die Umformung ohne vorherige Wärmezufuhr, beispielsweise durch Druckumformverfahren wie Hämmern, Kneten oder dergleichen.

Die Bildung von Vertiefungen auf der Innenfläche des Rohrs kann durch einen von außen über den Umfang des Rohrs gleichmäßig aufgebrachte Umformkraft erfolgen. Dadurch kann erreicht werden, dass das Rohr von außen seine zylindrische Form behält, und durch den Materialfluss beim Umformen Formschlusselemente auf der Außenseite der Hülse vorspringen, die in die beim Umformvorgang gebildeten Vertiefungen in der Innenseite des Rohrs formschlüssig eingeformt werden.

Nach dem gemeinsamen Umformen des Endabschnitts des Rohrs und der Hülse kann ein Kopplungsabschnitt in die Hülse eingebracht werden. Als Kopplungsabschnitt kann ein Innengewinde in der Hülse ausgebildet sein und/oder eine spezielle Umfangskontur, wie beispielsweise ein Dreieck, Sechseck oder Achteck. Eine derartige Kontur wird beispielsweise zur Ausbildung einer haltbaren Verbindung mit einer korrespondierenden Innenkontur einer Nabe eines Lenkrades oder einer Gabel für ein Universalgelenk oder eines Lenkritzels ausgebildet.

### Beschreibung der Zeichnungen

Vorteilhafte Ausführungsformen der Erfindung werden im Folgenden anhand der Zeichnungen näher erläutert. Im Einzelnen zeigen:
- Figur 1: eine Kraftfahrzeuglenkung,
- Figur 2: ein erfindungsgemäßes Lenkspindelteil in perspektivischer Darstellung,
- Figur 3: ein Rohr und eine Hülse vor dem Einsetzen in perspektivischer Darstellung,
- Figur 4: ein Rohr und eine Hülse nach dem Einsetzen in perspektivischer Darstellung,
- Figur 5: einen Längsschnitt durch die in Figur 3 gezeigte Anordnung,
- Figur 6: einen Längsschnitt durch die in Figur 4 gezeigte Anordnung,
- Figur 7: eine Detaildarstellung von Figur 6,
- Figur 8: einen Längsschnitt durch ein Lenkspindelteil in einer Umformvorrichtung vor dem Umformen,
- Figur 9: einen Längsschnitt durch ein Lenkspindelteil in einer Umformvorrichtung nach dem Umformen,
- Figur 10: eine Detailansicht des fertig umgeformten Lenkspindelteils gemäß Figur 9,
- Figur 11: das umgeformte Lenkspindelteil gemäß Figur 9 in einer auseinandergezogenen Darstellung,
- Figur 12: einen Umformdorn in perspektivischer Darstellung,
- Figur 13: eine zweite Ausführungsform einer erfindungsgemäßen Lenkspindelteils.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

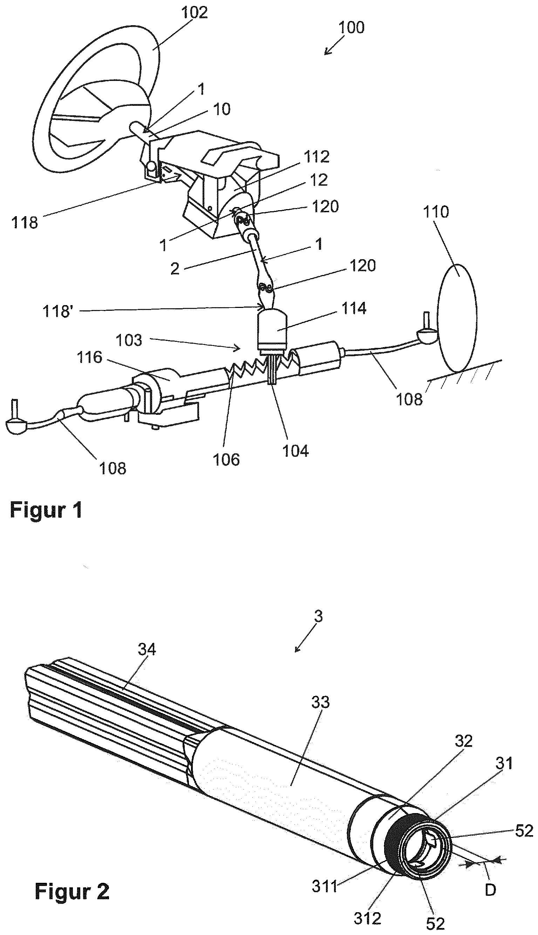

In Figur 1 ist eine Kraftfahrzeuglenkung 100 schematisch dargestellt, wobei ein Fahrer über ein Lenkrad 102 ein entsprechendes Lenk-Drehmoment (Lenkmoment) als Lenkbefehl in eine Lenkwelle 1 einbringen kann. Das Lenkmoment wird über die Lenkwelle 1 auf ein Lenkritzel 104 übertragen, welches mit einer Zahnstange 106 kämmt, die dann ihrerseits über eine Verschiebung der Spurstangen 108 den vorgegebenen Lenkwinkel auf die lenkbaren Räder 110 des Kraftfahrzeugs überträgt.

Eine elektrische Hilfskraftunterstützung kann in Form einer eingangsseitig mit der Lenkwelle 1 gekoppelten Hilfskraftunterstützung 112, einer mit dem Ritzel 104 gekoppelten Hilfskraftunterstützung 114 und/oder einer mit der Zahnstange 106 gekoppelten Hilfskraftunterstützung 116 vorgesehen sein. Die jeweilige Hilfskraftunterstützung 112, 114 oder 116 koppelt ein Hilfsdrehmoment in die Lenkwelle 1 und/oder das Lenkritzel 104 und/oder eine Hilfskraft in die Zahnstange 106 ein, wodurch der Fahrer bei der Lenkarbeit unterstützt wird. Die drei unterschiedlichen, in der Figur 1 dargestellten Hilfskraftunterstützungen 112, 114 und 116 zeigen mögliche Positionen für deren Anordnung.

Üblicherweise ist nur eine einzige der gezeigten Positionen mit einer Hilfskraftunterstützung 112, 114 oder 116 belegt. Das Hilfsdrehmoment bzw. die Hilfskraft, welche zur Unterstützung des Fahrers mittels der jeweiligen Hilfskraftunterstützung 112, 114 oder 116 aufgebracht werden soll, wird unter Berücksichtigung eines von einem Drehmomentsensor 118 ermittelten, vom Fahrer eingebrachten Lenkmoments bestimmt. Alternativ oder in Kombination mit der Einbringung des Hilfsdrehmoments kann von der Hilfskraftunterstützung 112, 114, 116 ein zusätzlicher Lenkwinkel in das Lenksystem eingebracht werden, der sich mit dem vom Fahrer über das Lenkrad 102 aufgebrachten Lenkwinkel summiert.

Die Lenkwelle 1 weist eingangsseitig eine mit dem Lenkrad 102 verbundene Eingangswelle 10 und ausgangsseitig eine mit der Zahnstange 106 über das Lenkritzel 104 verbundene Ausgangswelle 12 auf. Die Eingangswelle 10 und die Ausgangswelle 12 sind drehelastisch über einen in der Figur 1 nicht zu erkennenden Drehstab miteinander gekoppelt. Damit führt ein von einem Fahrer über das Lenkrad 102 in die Eingangswelle 10 eingetragenes Drehmoment immer dann zu einer Relativdrehung der Eingangswelle 10 bezüglich der Ausgangswelle 12, wenn die Ausgangswelle 12 sich nicht exakt synchron zu der Eingangswelle 10 dreht. Diese Relativdrehung zwischen Eingangswelle 10 und Ausgangswelle 12 kann über einen Drehwinkelsensor gemessen werden und entsprechend aufgrund der bekannten Torsionssteifigkeit des Drehstabes ein entsprechendes Eingangsdrehmoment relativ zur Ausgangswelle 12 bestimmt werden. Auf diese Weise wird durch die Bestimmung der Relativdrehung zwischen Eingangswelle 10 und Ausgangswelle 12 der Drehmomentsensor 118 ausgebildet. Ein solcher Drehmomentsensor 118 ist prinzipiell bekannt und kann beispielsweise eine elektromagnetische Sensoranordnung, wie sie weiter unten beschrieben wird, oder durch eine andere Messung der Relativverdrehung realisiert werden.

Entsprechend wird ein Lenkmoment, welches von dem Fahrer über das Lenkrad 102 auf die Lenkwelle 1 beziehungsweise die Eingangswelle 10 aufgebracht wird, nur dann den Eintrag eines Hilfsdrehmoments durch eine der Hilfskraftunterstützungen 112, 114, 116 bewirken, wenn die Ausgangswelle 12 gegen den Drehwiderstand des Drehstabs relativ zu der Eingangswelle 10 verdreht wird.

Der Drehmomentsensor 118 kann auch alternativ an der Position 118' angeordnet sein, wobei dann die Durchbrechung der Lenkwelle 1 in Eingangswelle 10 und Ausgangswelle 12 und die drehelastische Kopplung über den Drehstab entsprechend an einer anderen Position vorliegt, um aus der Relativverdrehung der über den Drehstab mit der Eingangswelle 10 gekoppelten Ausgangswelle 12 eine Relativdrehung und damit entsprechend ein Eingangsdrehmoment und/oder ein einzubringendes Hilfsdrehmoment bestimmen zu können.

Die Lenkwelle 1 gemäß Figur 1 umfasst weiterhin mindestens ein kardanisches Gelenk 120, mittels welchem der Verlauf der Lenkwelle 1 im Kraftfahrzeug an die räumlichen Gegebenheiten angepasst werden kann.

Die Eingangswelle 10 der Lenkwelle 1, auf dem in dem dargestellten Beispiel das Lenkrad 102 angebracht ist, ist erfindungsgemäß als längenveränderbare Lenkwelle 10 ausgebildet. Der äußere Teil der teleskopartig aufgebauten Lenkwelle 10 wird gebildet durch ein Lenkspindelteil 3.

Figur 2 zeigt das Lenkspindelteil 3, welches in der Kraftfahrzeuglenkung 100 gemäß Figur 1 den Teil der Eingangswelle 10 bildet, auf dem an dem bezüglich der Fahrtrichtung hinteren Ende das Lenkrad 102 angebracht ist. Das in Figur 2 nicht dargestellte Lenkrad 102 ist auf einem Verbindungsabschnitt 31 angebracht, der an dem in Figur 2 dem Betrachter zugewandten Endbereich des Lenkspindelteils 3 ausgebildet ist. Der Verbindungsabschnitt 31 kann außen mit einer Außenverzahnung 311 versehen sein, und innen mit einem Innengewinde 312, welches hier für eine verbesserte Übersichtlichkeit nur schematisch dargestellt. Auf die beispielsweise als Kerbverzahnung ausgebildete Außenverzahnung 311 kann ein Lenkrad 102 mit einer korrespondierenden Innenverzahnung formschlüssig aufgesteckt und durch Einschrauben einer Schraube in das Innengewinde 312 fixiert werden.

In dem Verbindungsabschnitt 31 beträgt die Wanddicke D.

An den Verbindungsabschnitt 31 schließt sich in Längsrichtung - bezüglich der Fahrtrichtung nach vorn ― ein sich konisch aufweitender Abschnitt 32 an, und daran ein Rohrabschnitt 33. Der Rohrabschnitt 33 geht über in einen Lenkmomentübertragungsabschnitt 34, der mit einer von einem Kreisbogen abweichenden Kontur versehen ist. In diesen ist zur Ausbildung einer zur Verstellung der Position des Lenkrads 102 teleskopierbaren, Drehmoment übertragenden Verbindung ein weiteres, hier nicht dargestelltes Lenkspindelteil axial, d.h. in Längsrichtung teleskopierend eingeführt. Der Lenkmomentübertragungsabschnitt 34 kann insbesondere mit einer über den Umfang ausgebildeten Bogenverzahnung bzw. einem Kleeblattprofil ausgebildet sein, welche mit dem Querschnitt des teleskopierenden Lenkspindelteil zur Bildung einer bezüglich Drehung formschlüssigen, drehmomentschlüssigen Verbindung korrespondiert.

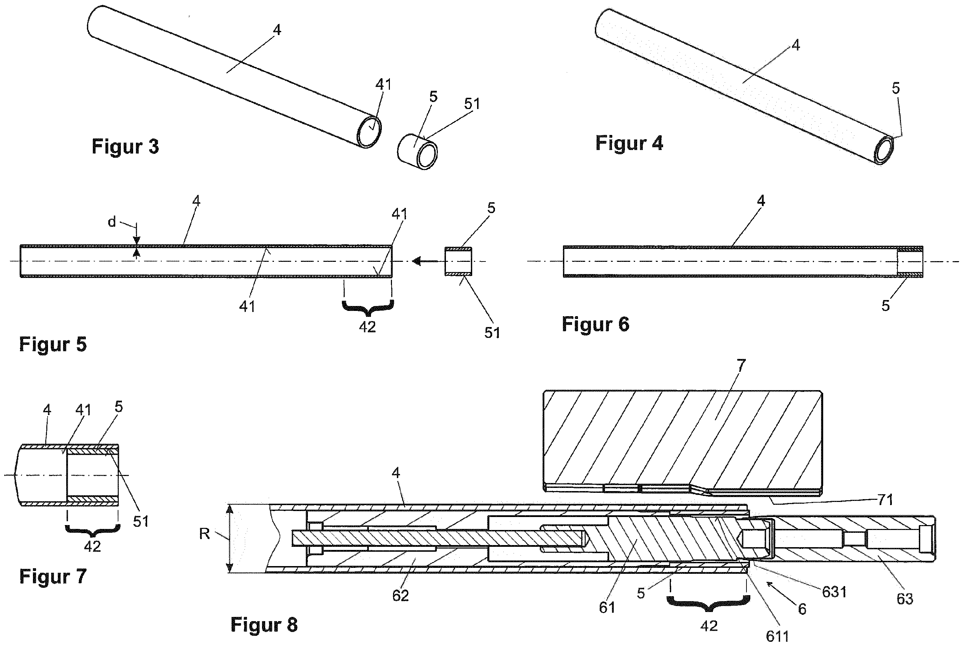

Wie in Figuren 3 und 5 dargestellt, wird als Ausgangsprodukt zur Herstellung eines Lenkspindelteils 3 ein hohlzylinderförmiges Rohr 4 bereitgestellt, das über seine gesamte Längserstreckung eine gleichförmige Wandstärke d aufweist, sowie eine ebenfalls hohlzylinderförmige Hülse 5. Das Rohr 4 hat eine in Umfangsrichtung glatte Innenfläche 41, die zylindermantelförmig ist mit einem kreislinienförmigen Querschnitt, und die keine von der Innenfläche radial vorstehende oder in diese vertiefte Strukturen aufweist. Die Hülse 5 hat eine in Umfangsrichtung glatte Außenfläche 51, die ebenfalls zylindermantelförmig ist mit einem kreislinienförmigen Querschnitt, und die ebenfalls keine radialen Vorsprünge oder Vertiefungen aufweist.

Die Wandstärke d des Rohrs 4 wird nur so groß gewählt, wie dies für die Stabilität des Lenkspindelteils 3, insbesondere zur Übertragung der auftretenden Drehmomente, erforderlich ist.

Der Außendurchmesser der Hülse 5 und der Innendurchmesser des Rohrs 4 werden so gewählt, dass die Hülse 5 reibschlüssig in einen Endabschnitt 42 des Rohrs 4 in Längsrichtung eingesetzt, nämlich axial eingepresst werden kann, wie in Figuren 3 und 5 mit dem Pfeil angedeutet.

Nach dem Einsetzen ist der in Figuren 4 und 6 dargestellt Zustand erreicht, bei dem die Hülse 5 bündig mit dem Ende des Rohrs 4 abschließt.

In Figur 7 ist ein vergrößerter Längsschnitt wiedergegeben, wie die Hülse 5 reibschlüssig in dem Endabschnitt 42 des Rohrs sitzt.

Im nächsten Schritt wird ein Dorn 6 in das Rohr 4 und die Hülse 5 eingeführt, wie in Figur 8 im Längsschnitt dargestellt. Der Dorn 6 ist dreiteilig ausgebildet und weist einen Umformdorn 61,einen ersten Stützdorn 62 und einen zweiten Stützdorn 63 auf. Der Umformdorn 61 ist in Längsrichtung im Endabschnitt 42 in der Öffnung der Hülse 5 positioniert und liegt mit seiner äußeren Bearbeitungsfläche von innen an der Hülse 5 an. Der erste Stützdorn 62 ist in dem sich daran anschließenden Abschnitt des Rohrs 4 positioniert und liegt dort an der Innenfläche 41 des Rohrs 4 an. Der zweite Stützdorn 63 weist eine Bohrung auf, in der ein Zapfen des Umformdorns 61 aufgenommen ist und diesen radial abstützt. Weiterhin umfasst der zweite Stützdorn 63 einen konischen Außenflächenabschnitt 631 auf, der zumindest teilweise in den Endabschnitt 42 hineinragt. Der Umformdorn 61 und der zweite Stützdorn 63 liegen in Längsrichtung nicht axial aneinander an, d.h. der Umformdorn 61 und der zweite Stützdorn 63 sind nicht auf Block gefahren.

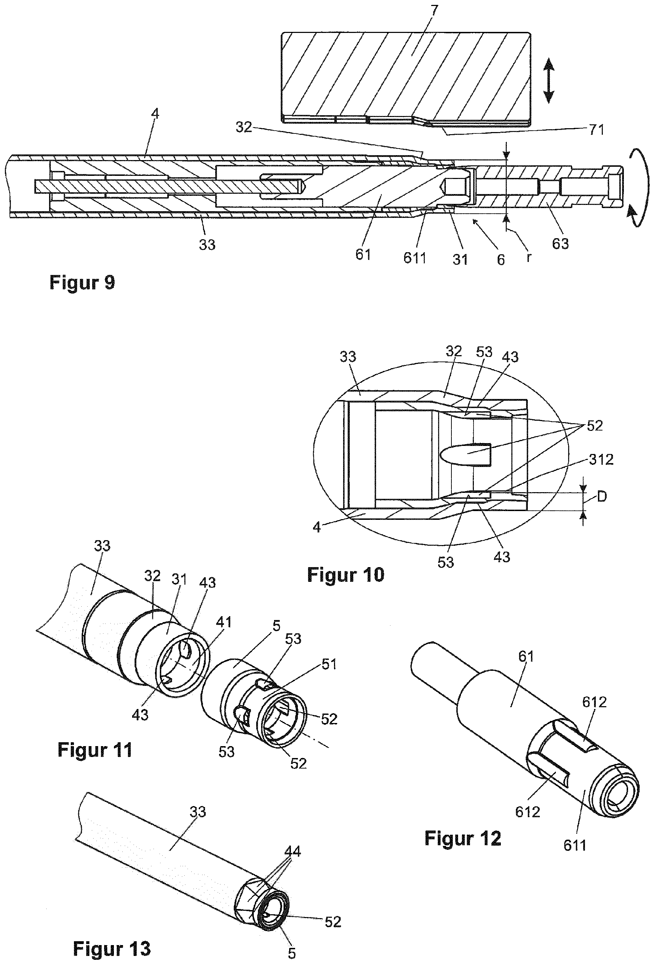

Der Umformdorn 61 ist vergrößert in Figur 12 perspektivisch dargestellt. Darin ist erkennbar, dass er eine zylindrische Formfläche 611 aufweist, die nach außen vorstehende Formvorsprünge 612 aufweist, die als in Längsrichtung verlaufende Rippen mit gerundetem Querschnitt ausgebildet sind. Im gezeigten Beispiel sind vier dieser Formvorsprünge 612 gleichmäßig über den Umfang verteilt angeordnet.

Zum Umformen wird der Dorn 6 mit dem Rohr 4 und der Hülse 5 in einer Umformeinrichtung mit einem Hämmerwerkzeug 7 angeordnet. Bevorzugt sind in der Umformeinrichtung mehrere Hämmerwerkzeug 7 gleichmäßig über den Umfang verteilt angeordnet. Zur Darstellung des Prinzips ist in der vereinfachten Darstellung von Figur 8 und 9 jeweils nur ein Hammerkopf 7 gezeigt.

Wie Figur 8 entnehmbar ist, hat das Rohr 5 zunächst einen über seine gesamte Länge durchgehenden gleichmäßigen Durchmesser R, auch im Endbereich 42. Beim Umformen werden mittels des Hämmerwerkzeug 7 Schläge in radialer Richtung auf den Endbereich 42 des Rohrs 4 ausgeübt, wie in Figur 9 mit dem Doppelpfeil angedeutet. Zwischen einzelnen Hammerschlägen wird der Dorn 6 samt Rohr 4 und Hülse 5 in kontinuierlich gedreht, wie mit dem gebogenen Pfeil angedeutet. Dadurch mit der Hammerfläche 71 des Hämmerwerkzeug 7 in einer Abfolge von Hammerschlägen der gesamte Außenumfang umgeformt.

Beim Auftreffen der Hammerfläche 71 wird das Rohr 4 im Endbereich 42 radial nach innen gegen die Hülse 5 verformt. Die Hülse 5 wird durch den Umformdruck ihrerseits plastisch verformt und dabei im Durchmesser verkleinert. Im Endzustand, der in Figur 9 dargestellt ist, ist an dem Rohr 4 der Endabschnitt 42 in den Verbindungsabschnitt 31 umgeformt, dessen Durchmesser r kleiner ist als der Durchmesser R des Rohrs 4. Beim Umformen kommt die Hülse 5 durchgehend in Kontakt mit der Formfläche 611 des Umformdorns 61. Dabei werden die Formvorsprünge 612 von innen unter Bildung von Einformungen 52 in die Innenseite der Hülse 5 plastisch eingeformt, wie in Figur 11 erkennbar, welche die Einzelteile nach dem Umformen gemäß Figur 9 in auseinander gezogenem Zustand zeigt.

Durch die Einformungen 52 werden auf der Außenfläche 51 der Hülse 5 vorstehende Vorsprünge 53 plastisch herausgedrückt, welche erfindungsgemäße Formschlusselemente an der Hülse 5 bilden. Diese Vorsprünge 53 pressen sich während des Umformens radial von innen in die Innenfläche 41 des Rohrs 4 ein, wodurch Vertiefungen 43 eingeformt werden, welche erfindungsgemäße Formschlusselemente in dem Rohr 4 bilden. Wie in der vergrößerten Schnittdarstelllung von Figur 10 erkennbar, greifen die Vorsprünge 53 der Hülse 5 formschlüssig in die Vertiefungen 43 des Rohrs 4 ein.

Alternativ oder zusätzlich können, wie in der Ausführung gemäß Figur 13, beim Umformen über den Umfang verteilt angeordnete Polygonflächen 44 ausgebildet werden. Dadurch werden beim erfindungsgemäßen gemeinsamen Umformen die Hülse 5 und das Rohr 4 im Verbindungsabschnitt 31 als formschlüssig ineinander eingreifende Mehrkant-Elemente, beispielsweise als Sechskante, ausgebildet. Diese Mehrkant-Elemente können konisch ausgebildet sein, wie die Polygonalflächen 44 in der Figur 13.

Sämtlichen gezeigten Beispielen ist gemeinsam, dass erfindungsgemäß die Formschlusselemente, beispielsweise die Vorsprünge 53 und die Vertiefungen 43, oder auch die Polygonflächen 44, nicht wie im Stand der Technik vorab in einem separaten Bearbeitungsschritt eingebracht werden, sondern während des gemeinsamen Umformens von Rohr 4 und Hülse 5 erzeugt werden. Dies ermöglich eine rationellere Fertigung, und eine verbesserte Verbindung von Hülse 5 und Rohr 4.

### Bezugszeichenliste

- 1: Lenkwelle
- 10: Eingangswelle
- 12: Ausgangswelle
- 100: Kraftfahrzeuglenkung
- 102: Lenkrad
- 103: Lenkgetriebe
- 104: Lenkritzel
- 106: Zahnstange
- 108: Spurstange
- 110: lenkbares Rad
- 112: Hilfskraftunterstützung
- 114: Hilfskraftunterstützung
- 116: Hilfskraftunterstützung
- 118: Drehmomentsensor
- 118': Drehmomentsensor
- 120: Gelenk
- 3: Lenkspindelteil
- 31: Verbindungsabschnitt
- 311: Außenverzahnung
- 312: Innengewinde
- 32: konischer Abschnitt
- 33: Rohrabschnitt
- 34: Lenkmomentübertragungsabschnitt
- 4: Rohr
- 41: Innenfläche
- 42: Endabschnitt
- 43: Vertiefungen
- 44: Polygonflächen
- 5: Hülse
- 51: Außenfläche
- 52: Einformung
- 53: Vorsprung
- 6: Dorn
- 61: Umformdorn
- 611: Formfläche
- 612: Formvorsprünge
- 62: erster Stützdorn
- 63: zweiter Stützdorn
- 7: Hämmerwerkzeug
- 71: Hammerfläche

## Patentansprüche

1. Verfahren zur Herstellung eines Lenkspindelteils, welches einen Abschnitt einer Lenkspindel für ein Kraftfahrzeug bildet und in Form einer Hohlwelle ausgebildet ist und welches zumindest an einem seiner Enden einen Verbindungsabschnitt (31) aufweist, der zumindest über einen Teil seiner Länge eine gegenüber einem sich an den Verbindungsabschnitt (31) anschließenden Abschnitt (33) des Lenkspindelteils vergrößerte Wandstärke (D) aufweist, umfassend die Schritte:
- Bereitstellen eines hohlzylinderförmigen Rohrs (4) mit einer in Umfangsrichtung glatten Innenfläche mit kreisrundem Querschnitt,
- Bereitstellen einer hohlzylinderförmigen Hülse (5),
- Einsetzen der Hülse (5) in einen Endabschnitt (42) des Rohrs (4),
- Gemeinsames Umformen des Endabschnitts (42) des Rohrs (4) und der Hülse (5), wobei ein Fließen des Materials des Rohrs (4) und der Hülse (5) erfolgt,
wobei die hohlzylinderförmige Hülse (5) eine in Umfangsrichtung glatte Außenfläche mit kreisrundem Querschnitt aufweist und durch das Fließen des Materials an dem Rohr (4) und an der Hülse (5) in Umfangsrichtung ineinander eingreifende Formschlusselemente (43, 53) ausgebildet werden zur Erzeugung eines in Umfangsrichtung wirkenden Formschlusses, **dadurch gekennzeichnet, dass** zum Umformen ein Dorn (6) mit unrundem Querschnitt in die Hülse (5) eingebracht wird, und von außen Umformdruck auf das Rohr (4) aufgebracht wird, um das Rohr (4) und die Hülse (5) gemeinsam auf dem Dorn (6) abzuformen, wobei der Umformdruck über mindestens ein Umformwerkzeug (7) auf das Rohr (4) aufgebracht wird.

2. Verfahren nach Anspruch 1, **dadurch gekennzeichnet, dass** die Querschnitte des Rohrs (4) und der Hülse (5) gemeinsam unrund deformiert werden.

3. Verfahren nach einem der vorhergehenden Ansprüche, **dadurch gekennzeichnet, dass** bei dem gemeinsamen Umformen des Rohrs (4) und der Hülse (5) ihre Außen- und Innendurchmesser zumindest über einen Abschnitt ihrer gemeinsamen Längserstreckung verringert werden.

4. Verfahren nach einem der vorhergehenden Ansprüche, **dadurch gekennzeichnet, dass** das Umformen durch Kaltumformen erfolgt.

5. Verfahren nach einem der vorhergehenden Ansprüche, **dadurch gekennzeichnet, dass** nach dem gemeinsamen Umformen des Endabschnitts (42) des Rohrs (4) und der Hülse (5) ein Kopplungsabschnitt in die Innenwand der Hülse (5) eingebracht wird.

6. Verfahren nach einem der vorhergehenden Ansprüche, **dadurch gekennzeichnet, dass** bei dem gemeinsamen Umformen des Endabschnitts (42) des Rohrs (4) und der Hülse (5) ein zum benachbarten Ende des Rohrs (4) hin sich verjüngender konischer Abschnitt (32) des Lenksäulenteils (3) und ein gegenüber diesem weiter in Richtung zum benachbarten Ende des Rohrs (4) gelegener hohlzylindrischer Abschnitt (33) ausgebildet wird.

## Claims

1. A method for producing a steering spindle part which forms a portion of a steering spindle for a motor vehicle and which is in the form of a hollow shaft and which, at least at one of its ends, comprises a connecting portion (31) which, at least over a part of its length, comprises an increased wall thickness (D) in relation to a portion (33) of the steering spindle part adjoining the connecting portion (31), comprising the steps:
- providing a hollow cylindrical tube (4) with an inner surface which is smooth in a circumferential direction and which comprises a circular cross section,
- providing a hollow cylindrical sleeve (5),
- inserting the sleeve (5) into an end portion (42) of the tube (4),
- jointly deforming the end portion (42) of the tube (4) and the sleeve (5), wherein a flow of the material of the tube (4) and of the sleeve (5) occurs,
wherein the hollow cylindrical sleeve (5) comprises an outer surface which is smooth in the circumferential direction and which comprises a circular cross section and, as a result of the flow of the material, positively locking elements (43, 53) which engage into one another in the circumferential direction are formed on the tube (4) and on the sleeve (5) for the purposes of generating positive locking which acts in the circumferential direction, **characterized in that**, for the deformation, a mandrel (6) with non-circular cross section is introduced into the sleeve (5), and a deformation pressure is exerted on the tube (4) from the outside in order to mold the tube (4) and the sleeve (5) jointly on the mandrel (6), wherein the deformation pressure is exerted on the tube (4) by means of at least one deformation tool (7).

2. The method as claimed in claim 1, **characterized in that** the cross sections of the tube (4) and of the sleeve (5) are jointly deformed into a non-circular shape.

3. The method as claimed in any of the preceding claims, **characterized in that**, during the joint deformation of the tube (4) and of the sleeve (5), the outer and inner diameter thereof are reduced at least over a portion of their common length extent.

4. The method as claimed in any of the preceding claims, **characterized in that** the deformation is performed by cold working.

5. The method as claimed in any of the preceding claims, **characterized in that**, after the joint deformation of the end portion (42) of the tube (4) and of the sleeve (5), a coupling portion is formed into the inner wall of the sleeve (5).

6. The method as claimed in any of the preceding claims, **characterized in that**, during the joint deformation of the end portion (42) of the tube (4) and of the sleeve (5), a conical portion (32), which narrows in the direction of the adjacent end of the tube (4), of the steering column part (3) and a hollow cylindrical portion (33), which is situated further in the direction of the adjacent end of the tube (4) in relation to said conical portion, are formed.

## Revendications

1. Procédé de fabrication d'une partie d'axe de direction, qui forme une section d'un axe de direction pour un véhicule automobile et est configurée sous la forme d'un arbre creux et qui comprend à au moins une de ses extrémités une section de liaison (31), qui présente sur au moins une partie de sa longueur une épaisseur de paroi (D) supérieure à celle d'une section (33) de la partie d'axe de direction se raccordant à la section de liaison (31), comprenant les étapes suivantes :
- la fourniture d'un tube cylindrique creux (4) doté d'une surface intérieure lisse dans la direction circonférentielle présentant une section transversale circulaire,
- la fourniture d'un manchon cylindrique creux (5),
- l'insertion du manchon (5) dans une section d'extrémité (42) du tube (4),
- la déformation commune de la section d'extrémité (42) du tube (4) et du manchon (5), un écoulement du matériau du tube (4) et du manchon (5) ayant lieu,
le manchon cylindrique creux (5) comprenant une surface extérieure lisse dans la direction circonférentielle présentant une section transversale circulaire, et l'écoulement du matériau formant sur le tube (4) et sur le manchon (5) des éléments à complémentarité de forme (43, 53) s'engageant l'un dans l'autre dans la direction circonférentielle pour produire une complémentarité de forme agissant dans la direction circonférentielle, **caractérisé en ce qu'**un mandrin (6) présentant une section transversale non circulaire est introduit dans le manchon (5) pour la déformation, et une pression de déformation est appliquée depuis l'extérieur sur le tube (4), afin de déformer conjointement le tube (4) et le manchon (5) sur le mandrin (6), la pression de déformation étant appliquée sur le tube (4) par l'intermédiaire d'au moins un outil de déformation (7).

2. Procédé selon la revendication 1, **caractérisé en ce que** les sections transversales du tube (4) et du manchon (5) sont déformées conjointement de manière non circulaire.

3. Procédé selon l'une quelconque des revendications précédentes, **caractérisé en ce que**, lors de la déformation commune du tube (4) et du manchon (5), leurs diamètres extérieurs et intérieurs sont réduits sur au moins une section de leur étendue longitudinale commune.

4. Procédé selon l'une quelconque des revendications précédentes, **caractérisé en ce que** la déformation a lieu par déformation à froid.

5. Procédé selon l'une quelconque des revendications précédentes, **caractérisé en ce qu'**après la déformation commune de la section d'extrémité (42) du tube (4) et du manchon (5), une section d'accouplement est introduite dans la paroi intérieure du manchon (5).

6. Procédé selon l'une quelconque des revendications précédentes, **caractérisé en ce que**, lors de la déformation commune de la section d'extrémité (42) du tube (4) et du manchon (5), une section conique (32) de la partie de colonne de direction (3) s'effilant vers l'extrémité voisine du tube (4) et une section cylindrique creuse (33) disposée plus loin par rapport à celle-ci dans la direction de l'extrémité voisine du tube (4) sont formées.
